# EUROPÄISCHE PATENTSCHRIFT

(11) **EP 2 394 807 B1**
(45) Veröffentlichungstag und Bekanntmachung des Hinweises auf die Patenterteilung: **19.06.2013**
(21) Anmeldenummer: 11163148.7
(22) Anmeldetag: 20.04.2011
(51) Int. Cl.: B29D 30/32

(54) **Verfahren zur Herstellung eines Fahrzeugreifens**
Method for producing a tyre for a vehicle
Procédé de fabrication d'un pneu de véhicule

(30) Priorität: 08.06.2010 DE 102010017272
(43) Veröffentlichungstag der Anmeldung: 14.12.2011
(73) Patentinhaber: Continental Reifen Deutschland GmbH, 30165 Hannover (DE)
(72) Erfinder: Elsen, Patrick, 5312 Contern (LU); Thomforde, Claudia, 38542 Leiferde (DE)
(74) Vertreter: Finger, Karsten

(56) Entgegenhaltungen:
- EP-A2- 0 983 876
- WO-A1-2004/091939
- WO-A1-2006/134969
- US-A- 3 032 093
- US-A- 3 746 598
- US-B1- 6 374 891

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen. Der Lagenumschlag im Reifenwulst bei konventionellen Fahrzeugreifen besitzt den Nachteil, dass die Kraft- und Spannungsverteilung im Reifenwulst u. U. nicht optimal ist. Eine ungünstige Kraft bzw. Spannungsverteilung im Reifenwulst wirkt sich nachteilig auf die Dauerhaltbarkeit des Reifenwulstes aus.

Bei der konventionellen Reifenherstellung wird bei einem Verfahrensschritt das Einlagenende von der Reifeninnenseite um den Wulstkern herumgeschlagen. Ein solcher Lagenumschlag lässt sich relativ gut bei der Reifenherstellung applizieren. Ein wesentlicher Nachteil bei diesem Lagenumschlag liegt in einer ungünstigen Spannungsverteilung am Reifenwulst.

Die US 376 598 A, WO 2004/091939 A1, US 6 374 891 B1, EP 0983 876 A2, US 3 032 093 A und WO 2006/134969 A1 offenbaren herkömmliche Verfahren zur Herstellung von Fahrzeugreifen.

Der Erfindung liegt die Aufgabe zugrunde, ein Verfahren bereitzustellen, mit dem ein Fahrzeugreifen mit einer optimierten Wulstkonstruktion hergestellt werden kann.

Gelöst wird die Aufgabe gemäß Anspruch 1 dadurch, dass ein Verfahren mit folgenden Schritten eingesetzt wird:
a) seitliches Anordnen eines ersten innenliegenden Wulstkernes mit einem innenliegenden Apex auf beiden Seiten einer Karkasstrommel,
b) Auflegen einer Einlage für eine Reifenkarkasse auf einer Karkasstrommel, wobei der Endbereich der Einlage in seiner Breitenausdehnung die Karkasstrommel sowie den innenliegenden Wulstkern überragt,
c) Herunterarbeiten des Endbereiches der Einlage seitlich an den innenliegenden Wulstkern, wobei das Einlagenende unterhalb des Wulstkernes angeordnet wird
d) seitliches Anordnen eines zweiten außenliegenden Wulstkernes mit einem außenliegenden Apex auf beiden Seiten der heruntergearbeiteten Endbereiche der Einlage, wobei der jeweilige Endbereich der Einlage zwischen dem innenliegenden und dem außenliegenden Wulstkern eingeklemmt wird,
e) Halten der fertigen Reifenkarkasse mit Haltemitteln,
f) Verkleinerung des Außendurchmessers der Karkasstrommel,
g) Abnahme der fertigen Reifenkarkasse von der Karkasstrommel und Vervollständigung des Reifenrohlings mit einem konventionellen Herstellungsverfahren.

Ein Vorteil der Erfindung ist insbesondere darin zu sehen, dass durch das Verfahren auf einfache Weise ein Fahrzeugreifen mit einer optimalen Wulstkonstruktion hergestellt werden kann. Mit dem Verfahren wird das Einlagenende zwischen einem innenliegenden und einem außenliegenden Wulstkern fest eingeklemmt. Dadurch ist kein Lagenumschlag mehr erforderlich, wie das bei einer herkömmlichen Wulstkonstruktion der Fall ist.

Ein weiterer Vorteil der Erfindung ist insbesondere darin zu sehen, dass durch das erfindungsgemäße Verfahren eine optimale Spannungsverteilung im Reifenwulst erreicht wird. Die in der Einlage des Fahrzeugreifens wirkenden Kräfte werden gleichmäßig auf den innenliegenden und den außenliegenden Wulstkern verteilt. Die Verdickung am Lagenende sorgt für eine sichere Verankerung der Einlage im Reifenwulst. Dadurch wird ein selbständiges Herausziehen der Einlage zwischen den beiden Reifenkernen verhindert. Außerdem werden die Festigkeitsträger, die in der Einlage angeordnet sind, ebenfalls fest zwischen den beiden Reifenkernen verankert. Eine feste Verankerung der Festigkeitsträger ist insbesondere beim Bombieren der Karkasse oder beim Einformen des Reifenrohlings in die Vulkanisationspresse notwendig. Außerdem reduziert man die Wulstbreite um ein erhebliches Maß und schafft dadurch Platz für zusätzliche Wulstbauteile, beispielsweise Wulstverstärkerstreifen, die die Fahreigenschaften des Fahrzeugreifens verbessern. Ferner wird erfindungsgemäß die Wulsthaltbarkeit des Reifenwulstes erhöht, da eine geringere mechanische Dauerbelstung am Reifenwulst wirkt.

In einer vorteilhaften Weiterbildung der Erfindung ist vorgesehen, dass das Einlagenende der Einlage mit einer Verdickung versehen ist, wobei die Verdickung beim Herunterarbeiten des Endbereiches der Einlage bei Schritt c) unterhalb des innenliegenden Wulstkernes angeordnet wird.

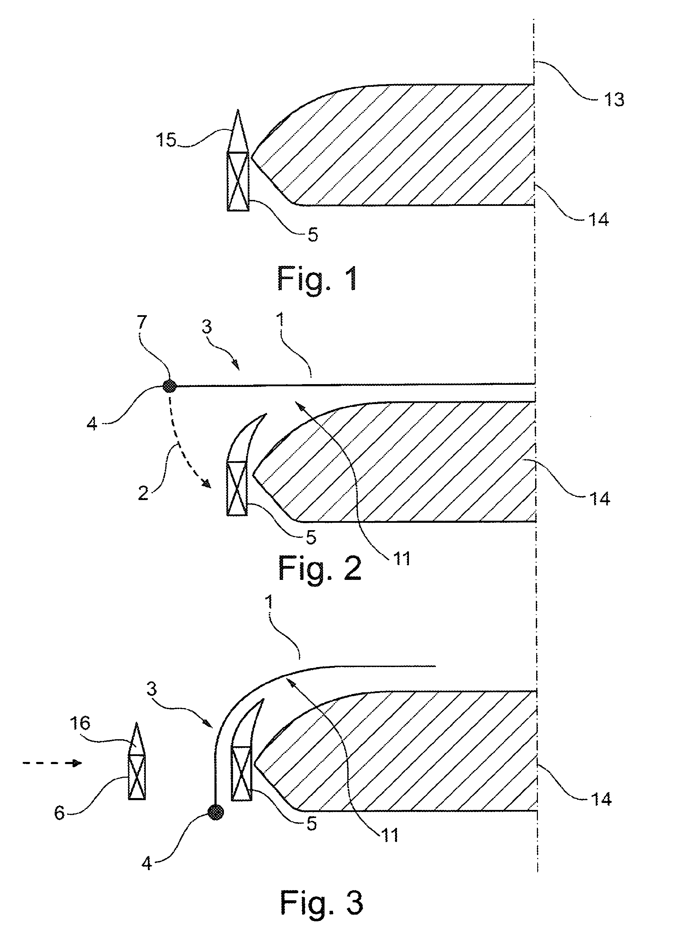

Ein entsprechendes Ausführungsbeispiel ist in der Figur 2 gezeigt. Durch die Verdickung am Einlagenende wird eine feste Verankerung des Einlagenendes im Reifenwulst erzielt. Die Verdickung ließe sich relativ einfach direkt vor dem Herunterarbeiten des Endbereiches der Einlage am Einlagenende anordnen.

In einer weiteren vorteilhaften Weiterbildung der Erfindung ist vorgesehen, dass die Verdickung am Einlagenende durch ein spiralförmig aufgerolltes Einlagenende gebildet wird. Auf diese Weise lässt sich die Verdickung am Einlagenende relativ einfach herstellen.

In einer weiteren vorteilhaften Weiterbildung der Erfindung ist vorgesehen, dass die Herstellung der Verdickung am Einlagenende vor Schritt b) bei einer gesonderten Material-Vorkonfektionierung erfolgt.

Auf diese Weise würde die Taktzeit an der Karkasstrommel beim Herstellen der Reifenkarkasse erheblich reduziert werden.

In einer weiteren vorteilhaften Weiterbildung der Erfindung ist vorgesehen, dass die Herstellung der Verdickung am Einlagenende nach Schritt b) erfolgt.

Auf diese Weise würde man Zeit bei der Materialvorkonfektionierung sparen. Mit entsprechenden Werkzeugen ließe sich die Verdickung am Einlagenende relativ schnell herstellen.

In einer weiteren vorteilhaften Weiterbildung der Erfindung ist vorgesehen, dass im aufgerollten Einlagenende mindestens ein in Umfangsrichtung des Reifenwulstes ausgerichtetes Verstärkungsmittel angeordnet ist.

Das eingerollte oder eingewickelte Verstärkungsmittel verstärkt die Verdickung am Einlagenende, wodurch das Einlagenende fest im Reifenwulst verankert wird.

In einer weiteren vorteilhaften Weiterbildung der Erfindung ist vorgesehen, dass die Verdickung am Einlagenende durch einen Verstärkungsmittel gebildet wird,
wobei dieses Verstärkungsmittel nach Schritt c) von der Seite im Endbereich der Einlage unterhalb vom innenliegenden Wulstkern angeordnet wird,
wobei anschließend ein Lagenumschlag des Endbereiches der Einlage um das Verstärkungsmittel herum erfolgt.

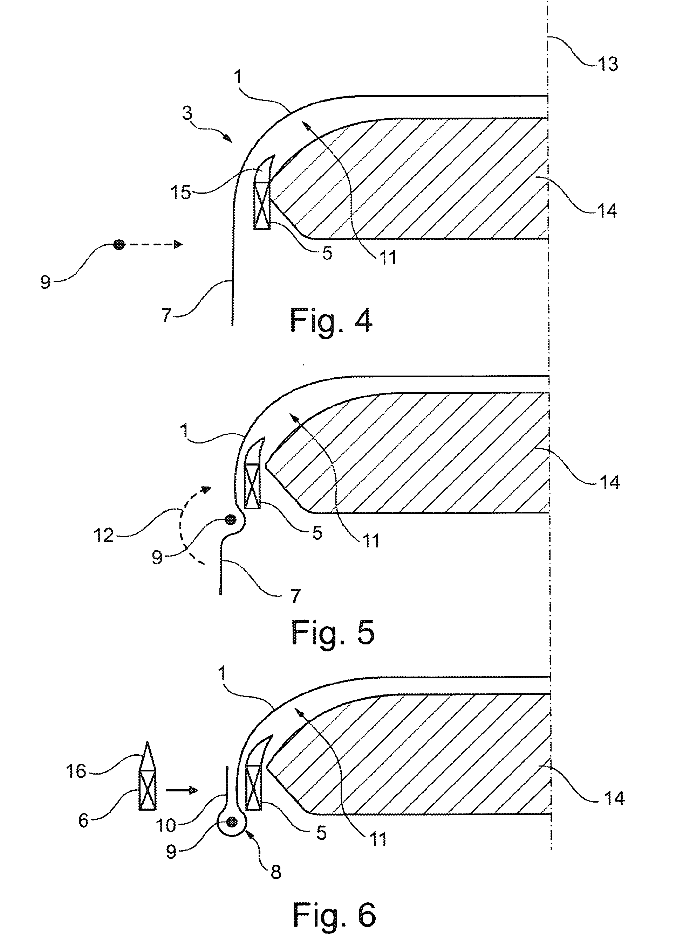

Ein entsprechendes Ausführungsbeispiel ist in den Figuren 4 bis 6 gezeigt. Der Vorteil bei diesem Verfahren ist, dass auch der Lagenumschlag durch den innenliegenden und den außenliegenden Wulstkern fest eingeklemmt wird. Des Weiteren sorgt die Verdickung unterhalb der beiden Wulstkerne für eine feste Verankerung des Einlagenendes.

In einer weiteren vorteilhaften Weiterbildung der Erfindung ist vorgesehen, dass das Verstärkungsmittel aus Stahlcord, Textil oder einem Elastomer besteht.

Diese Materialien besitzen optimale Festigkeitseigenschaften.

In einer weiteren vorteilhaften Weiterbildung der Erfindung ist vorgesehen, dass das Verstärkungsmittel aus einem fadenförmigen Verbundmaterial besteht, wobei dieses Verbundmaterial eine Kombination von Stahlcord, Textil oder einem Elastomer umfasst. Mit einem entsprechenden Verbundmaterial lassen sich die Festigkeitseigenschaften des Verstärkungsmittels gezielt beeinflussen. Dadurch wird das Einlagenende mit einer hohen Festigkeit im Reifenwulst verankert.

In einer weiteren vorteilhaften Weiterbildung der Erfindung ist vorgesehen, dass das Verstärkungsmittel in Umfangsrichtung des Reifenwulstes partiell Unterbrechungen aufweist.

Partielle Unterbrechungen im Verstärkungsmittel können insbesondere bei der Herstellung der Reifenkarkasse vorteilhaft sein, insb. beim Anordnen der Langenenden zwischen beiden Wulstkernen.

Anhand mehrerer Ausführungsbeispiele soll die Erfindung näher erläutert werden. Es zeigen:
Figur 1 - 3: Ein erstes Ausführungsbeispiel des erfindungsgemäßen Verfahrens,
Figur 4 - 6: Ein weiteres Ausführungsbeispiel des erfindungsgemäßen Verfahrens.

Die Figuren 1 - 3 zeigen ein erstes Ausführungsbeispiel des erfindungsgemäßen Verfahrens. In der Figur 1 ist ein erster Verfahrensschritt dargestellt, bei dem die Karkasstrommel 14 in einem expandierten Zustand dargestellt ist. Die Karkasstrommel 14 ist in einer Radialschnittansicht dargestellt, wobei sich alle Bauteile an der Symmetrieachse 13 spiegeln. Zur vereinfachten Darstellung wurde nur eine Hälfte der Karkasstrommel 14 dargestellt. Bei einem der ersten Verfahrensschritte wird ein innenliegender Wulstkern 5, der bereits mit einem innenliegenden Apex 15 versehen ist, seitlich neben der Karkasstrommel 14 angeordnet. Das Gleiche gilt für die rechte Karkasstrommelseite, die in der Figur 1 nicht dargestellt ist.

Die Figur 2 zeigt einen weiteren Verfahrensschritt, bei dem die Einlage bzw. Karkasslage 1 auf die Karkasstrommel 14 aufgelegt bzw. aufgewickelt wird. Der Endbereich 3 der Einlage 1 überragt auf beiden Seiten die Karkasstrommel 14. Am Einlagenende 7 ist eine Verdickung 4 in Form eines spiralförmig eingerollten Einlagenendes vorgesehen. Denkbar ist, dass in diesem Einlagenende ein weiteres Verstärkungsmittel eingewickelt ist. Die Bewegungsrichtung 2 des Herunterarbeitens des Endbereiches 3 der Einlage 1 ist mit dem gestrichelten Pfeil dargestellt. Die Reifeninnenseite 11 liegt auf der rechten Seite des innenliegenden Wulstkernes 5.

Die Figur 3 zeigt den Verfahrensschritt, nachdem der Endbereich 3 der Einlage 1 an der Karkasstrommel und dem innenliegenden Wulstkern 5 heruntergearbeitet worden ist. Die Verdickung 4 liegt unterhalb des innenliegenden Wulstkernes 5 an. Außerdem liegt der Endbereich 3 der Einlage 1 an der Außenseite des innenliegenden Wulstkernes 5 an. Nach diesem Verfahrensschritt wird der außenliegende Wulstkern 6 mit dem außenliegenden Apex 16 von der Seite an die Karkasstrommel 14 herangeführt und gegen den Endbereich 3 der Einlage 1 gedrückt. Dadurch wird der Endbereich 3 der Einlage 1 fest zwischen dem außenliegenden und dem innenliegenden Wulstkern 5 eingeklemmt. Die Verdickung 4 am Einlagenende 7 sorgt dabei zusätzlich für eine feste Verankerung des Einlagenendes im Reifenwulst.

In einem weiteren nicht dargestellten Verfahrensschritt wird die Reifenkarkasse mit einem Haltemittel gegriffen. Anschließend fällt die Karkasstrommel 14 ein, wobei der Außendurchmesser der Karkasstrommel entsprechend reduziert wird. Die mit dem Haltemittel gegriffene Reifenkarkasse wird anschließend zu einer weiteren Reifenaufbautrommel transferiert und nachfolgend der Reifenrohling fertiggestellt.

Die Figuren 4 - 6 zeigen ein weiteres Ausführungsbeispiel des erfindungsgemäßen Verfahrens. Die Figur 4 zeigt die Karkasstrommel 14 in einem expandierten Zustand. Es ist wiederum eine Radialschnittansicht der Karkasstrommel 14 und der anderen Bauteile dargestellt, wobei sich alle Bauteile an der Symmetrieachse 13 spiegeln. In einem ersten Verfahrensschritt wird der innenliegende Wulstkern 5 mit dem innenliegenden Apex 15 seitlich an der Karkasstrommel 14 angeordnet. Anschließend wird die Einlage 1 bzw. die Karkasslage 1 auf die Karkasstrommel 14 aufgelegt bzw. aufgewickelt. In einem nächsten Schritt wird der Endbereich 3 der Einlage 1 in der dargestellten Weise heruntergearbeitet, so dass dieser Bereich seitlich vom innenliegenden Wulstkern 5 anliegt. In einem weiteren Verfahrensschritt wird das Verstärkungsmittel 9 seitlich an den Endbereich der Einlage 3 herangeführt, so dass dieser in etwa unterhalb des innenliegenden Wulstkernes 5 anliegt. Die Reifeninnenseite 11 liegt auf der rechten Seite des innenliegenden Wulstkernes 5.

Die Figur 5 zeigt den Verfahrensschritt, bei dem das Einlagenende 7 um das Verstärkungsmittel 9 herumgeschlagen wird. Die Bewegungsrichtung 12 beim Lagenumschlag ist durch den gestrichelten Pfeil dargestellt.

Die Figur 6 zeigt einen weiteren Verfahrensschritt, bei dem der außenliegende Wulstkern 6 mit dem außenliegenden Apex 16 seitlich an die Karkasstrommel 14 herangeführt wird. Bei diesem Verfahrensschritt wird der Endbereich 3 der Einlage 1 mit dem Lagenumschlag 10 fest zwischen dem innenliegenden und dem außenliegenden Wulstkern 6 eingeklemmt. Dabei liegt die Verdickung 8 in Form eines Lagenumschlag mit einem eingeschlossenen Verstärkungsmittel 9 direkt unter den beiden Wulstkernen 5 und 6 an.

In einem weiteren nicht dargestellten Verfahrensschritt wird ein Haltemittel an die Reifenkarkasse verfahren. Anschließend fällt die Karkasstrommel 14 zusammen. Die fertige Reifenkarkasse wird anschließend mit dem Haltemittel zu einer weiteren Reifenaufbautrommel verfahren, an dem der Reifenrohling fertiggestellt wird.

### Bezugszeichenliste

### (ist Teil der Beschreibung)

- 1: Einlage
- 2: Bewegungsrichtung des Herunterarbeitens des Endbereiches der Einlage
- 3: Endbereich der Einlage
- 4: Verdickung in Form eines spiralfömrig aufgerollten Einlagenendes
- 5: innenliegender Wulstkern
- 6: außenliegender Wulstkern
- 7: Einlagenende
- 8: Verdickung in Form eines Lagenumschlages mit einem eingeschlossenen Verstärkungsmittel
- 9: Verstärkungsmittel
- 10: Lagenumschlag
- 11: Reifeninnenseite
- 12: Bewegungsrichtung beim Lagenumschlag
- 13: Symmetrieachse
- 14: Karkasstrommel
- 15: innenliegender Apex
- 16: außenliegender Apex

## Patentansprüche

1. Verfahren zur Herstellung eines Fahrzeugreifens mit folgenden Schritten:
a) seitliches Anordnen eines ersten innenliegenden Wulstkernes (5) mit einem innenliegenden Apex (15) auf beiden Seiten einer Karkasstrommel (14),
b) Auflegen einer Einlage für eine Reifenkarkasse auf einer Karkasstrommel (14), wobei der Endbereich (3) der Einlage (1) in seiner Breitenausdehnung die Karkasstrommel (14) sowie den innenliegenden Wulstkern (5) überragt,
c) Herunterarbeiten des Endbereiches (3) der Einlage (1) seitlich an den innenliegenden Wulstkern (5), wobei das Einlagenende (7) unterhalb des Wulstkernes (6) angeordnet wird
d) seitliches Anordnen eines zweiten außenliegenden Wulstkernes (6) mit einem außenliegenden Apex (16) auf beiden Seiten der heruntergearbeiteten Endbereiche (3) der Einlage (1), wobei der jeweilige Endbereich (3) der Einlage (1) zwischen dem innenliegenden (5) und dem außenliegenden Wulstkern (6) eingeklemmt wird,
e) Halten der fertigen Reifenkarkasse mit Haltemitteln,
f) Verkleinerung des Außendurchmessers der Karkasstrommel (14),
g) Abnahme der fertigen Reifenkarkasse von der Karkasstrommel (14) und Vervollständigung des Reifenrohlings mit einem konventionellen Herstellungsverfahren.

2. Verfahren nach Anspruch 1,
**dadurch gekennzeichnet, dass**
das Einlagenende (7) der Einlage (1) mit einer Verdickung (4) versehen ist, wobei die Verdickung (4) beim Herunterarbeiten des Endbereiches der Einlage bei Schritt c) unterhalb des innenliegenden Wulstkernes angeordnet wird.

3. Verfahren nach einem der vorhergehenden Ansprüche,
**dadurch gekennzeichnet, dass**
die Verdickung (4) am Einlagenende (7) durch ein spiralförmig aufgerolltes Einlagenende (7) gebildet wird.

4. Verfahren nach einem der vorhergehenden Ansprüche,
**dadurch gekennzeichnet, dass**
die Herstellung der Verdickung (4) am Einlagenende (7) vor Schritt b) bei einer gesonderten Material-Vorkonfektionierung erfolgt.

5. Verfahren nach einem der vorhergehenden Ansprüche,
**dadurch gekennzeichnet, dass**
die Herstellung der Verdickung (4) am Einlagenende (7) nach Schritt b) erfolgt.

6. Verfahren nach einem der vorhergehenden Ansprüche,
**dadurch gekennzeichnet, dass**
im aufgerollten Einlagenende (7) mindestens ein in Umfangsrichtung des Reifenwulstes ausgerichtetes Verstärkungsmittel (9) angeordnet ist.

7. Verfahren nach einem der vorhergehenden Ansprüche,
**dadurch gekennzeichnet, dass**
die Verdickung (8) am Einlagenende (7) durch einen Verstärkungsmittel (9) gebildet wird,
wobei dieses Verstärkungsmittel (9) nach Schritt c) von der Seite im Endbereich (3) der Einlage (1) unterhalb vom innenliegenden Wulstkern (5) angeordnet wird, wobei anschließend ein Lagenumschlag (10) des Endbereiches (3) der Einlage (1) um das Verstärkungsmittel (9) herum erfolgt.

8. Verfahren nach einem der vorhergehenden Ansprüche,
**dadurch gekennzeichnet, dass**
das Verstärkungsmittel (9) aus Stahlcord, Textil oder einem Elastomer besteht.

9. Verfahren nach einem der vorhergehenden Ansprüche,
**dadurch gekennzeichnet, dass**
das Verstärkungsmittel (9) aus einem fadenförmigen Verbundmaterial besteht, wobei dieses Verbundmaterial eine Kombination von Stahlcord, Textil oder einem Elastomer umfasst.

10. Verfahren nach einem der vorhergehenden Ansprüche,
**dadurch gekennzeichnet, dass**
das Verstärkungsmittel (9) in Umfangsrichtung des Reifenwulstes partiell Unterbrechungen aufweist.

## Claims

1. Method for producing a vehicle tyre comprising the steps of:
a) laterally arranging a first, inner bead core (5) with an inner apex (15) on both sides of a carcass drum (14),
b) placing an insert for a tyre carcass on a carcass drum (14), the end region (3) of the insert (1) projecting in the extent of its width beyond the carcass drum (14) and beyond the inner bead core (5),
c) working down the end region (3) of the insert (1) laterally onto the inner bead core (5), the end of the insert (7) being arranged under the bead core (6),
d) laterally arranging a second, outer bead core (6) with an outer apex (16) on both sides of the worked-down end regions (3) of the insert (1), the respective end region (3) of the insert (1) being clamped between the inner bead core (5) and the outer bead core (6),
e) holding the finished tyre carcass by holding means,
f) reducing the outside diameter of the carcass drum (14),
g) removing the finished tyre carcass from the carcass drum (14) and completing the tyre blank by a conventional production process.

2. Method according to Claim 1, **characterized in that** the end of the insert (7) of the insert (1) is provided with a thickening (4), the thickening (4) being arranged underneath the inner bead core when the end region of the insert is being worked down in step c).

3. Method according to one of the preceding claims, **characterized in that** the thickening (4) at the end of the insert (7) is formed by a spirally rolled-up end of the insert (7).

4. Method according to one of the preceding claims, **characterized in that** the production of the thickening (4) at the end of the insert (7) is performed before step b) in a separate material prefabrication.

5. Method according to one of the preceding claims, **characterized in that** the production of the thickening (4) at the end of the insert (7) is performed after step b).

6. Method according to one of the preceding claims, **characterized in that** at least one reinforcing means (9) aligned in the circumferential direction of the tyre bead is arranged in the rolled-up end of the insert ( 7).

7. Method according to one of the preceding claims, **characterized in that** the thickening (8) at the end of the insert (7) is formed by a reinforcing means (9), this reinforcing means (9) being arranged underneath the inner bead core (5) from the side in the end region (3) of the insert (1) after step c), being followed by a ply turnup (10) of the end region (3) of the insert (1) around the reinforcing means (9).

8. Method according to one of the preceding claims, **characterized in that** the reinforcing means (9) consists of steel cord, textile or an elastomer.

9. Method according to one of the preceding claims, **characterized in that** the reinforcing means (9) consists of a filamentary composite material, this composite material comprising a combination of steel cord, textile or an elastomer.

10. Method according to one of the preceding claims, **characterized in that** the reinforcing means (9) partially has interruptions in the circumferential direction of the tyre bead.

## Revendications

1. Procédé de fabrication d'un bandage pour roue de véhicule, le procédé comportant les étapes suivantes :
a) disposer latéralement une première âme intérieure de bourrelet (5) dotée d'un sommet intérieur (15) sur les deux côtés d'un tambour de carcasse (14),
b) poser une garniture de carcasse de bandage de roue sur un tambour de carcasse (14), la partie d'extrémité (3) de la garniture (1) débordant en largeur du tambour de carcasse (14) ainsi que de l'âme intérieure de bourrelet (5),
c) rabattre la partie d'extrémité (3) de la garniture (1) latéralement sur l'âme intérieure de bourrelet (5), l'extrémité (7) de la garniture étant alors disposée en dessous de l'âme de bourrelet (6),
d) disposer latéralement une deuxième âme extérieure de bourrelet (6) dont le sommet (16) est situé à l'extérieur sur les deux côtés des parties rabattues d'extrémité (3) de la garniture (1), chaque partie d'extrémité (3) de la garniture (1) étant serrée entre l'âme intérieure de bourrelet (5) et l'âme extérieure de bourrelet (6),
e) maintenir la carcasse terminée du bandage de roue à l'aide de moyens de maintien,
f) réduire le diamètre extérieur du tambour de carcasse (14) et
g) enlever la carcasse terminée du bandage de roue hors du tambour de carcasse (14) et poursuivre la réalisation de l'ébauche de bandage de roue par un procédé de fabrication classique.

2. Procédé selon la revendication 1, **caractérisé en ce que** l'extrémité (7) de la garniture (1) est dotée d'un épaississement (4) et l'épaississement (4) est disposé en dessous de l'âme intérieure de bourrelet lors du rabattement de la partie d'extrémité de la garniture à l'étape c).

3. Procédé selon l'une des revendications précédentes, **caractérisé en ce que** l'épaississement (4) prévu à l'extrémité (7) de la garniture est formé par une extrémité (7) de garniture enroulée en spirale.

4. Procédé selon l'une des revendications précédentes, **caractérisé en ce que** la réalisation de l'épaississement (4) à l'extrémité (7) de la garniture s'effectue avant l'étape b) dans une opération de pré-confection spéciale du matériau.

5. Procédé selon l'une des revendications précédentes, **caractérisé en ce que** la réalisation de l'épaississement (4) à l'extrémité (7) de la garniture s'effectue après l'étape b).

6. Procédé selon l'une des revendications précédentes, **caractérisé en ce qu'**au moins un moyen de renfort (9) orienté dans la direction de la périphérie du bourrelet de bandage de roue est disposé dans l'extrémité enroulée (7) de la garniture.

7. Procédé selon l'une des revendications précédentes, **caractérisé en ce que** l'épaississement (8) prévu à l'extrémité (7) de la garniture est formé par un moyen de renfort (9), ce moyen de renfort (9) étant disposé après l'étape c) par le côté de la partie d'extrémité (3) de la garniture (1) en dessous de l'âme intérieure de bourrelet (5), un rabattement (10) de la partie d'extrémité (3) de la garniture (1) s'effectuant ensuite autour du moyen de renfort (9).

8. Procédé selon l'une des revendications précédentes, **caractérisé en ce que** le moyen de renfort (9) est constitué de câbles d'acier, de textile ou d'un élastomère.

9. Procédé selon l'une des revendications précédentes, **caractérisé en ce que** le moyen de renfort (9) est constitué d'un matériau composite en forme de fil, ce matériau composite présentant une combinaison de câble d'acier, de textile ou d'un élastomère.

10. Procédé selon l'une des revendications précédentes, **caractérisé en ce que** le moyen de renfort (9) présente des interruptions partielles dans la direction périphérique du bourrelet du bandage de roue.
